# FASCICULE DE BREVET EUROPEEN

(11) **EP 1 534 568 B1**
(45) Date de publication et mention de la délivrance du brevet: **14.03.2007**
(21) Numéro de dépôt: 03769551.7
(22) Date de dépôt: 02.09.2003
(51) Int. Cl.: B60T 8/48, B60T 8/36

(54) **DISPOSITIF ANTI-PATINAGE ET ANTI-BLOCAGE DES ROUES D'UN VEHICULE EQUIPE D'UN SYSTEME DE FREINAGE**
ANTRIEBSSCHLUPF- UND ANTIBLOCKIERVORRICHTUNG FÜR RÄDER EINES MIT EINEM BREMSSYSTEM AUSGERÜSTETEN FAHRZEUGS
ANTISKID AND ANTILOCK DEVICE FOR WHEELS OF A VEHICLE EQUIPPED WITH A BRAKING SYSTEM

(30) Priorité: 02.09.2002 FR 0210824
(43) Date de publication de la demande: 01.06.2005
(60) Demande divisionnaire: 06115426.6
(73) Titulaire: POCLAIN HYDRAULICS INDUSTRIE, 60411 Verberie (FR)
(72) Inventeur: ROUILLARD, Jean-Marie, F-60610 La Crois Saint Ouen (FR); LUCIENNE, Philippe, F-60300 Aumont en Halatte (FR)
(74) Mandataire: Intes, Didier Gérard André
(86) Numéro de dépôt international: PCT/FR2003/002624
(87) Numéro de publication internationale: WO 2004/020264

(56) Documents cités:
- EP-A- 0 110 119
- EP-A- 0 479 044
- EP-A- 0 526 276
- WO-A-89/01431
- WO-A-92/03321
- WO-A-92/07743
- WO-A-97/14592
- WO-A-97/21574
- FR-A- 2 109 961
- US-A- 3 169 595
- US-A- 5 727 851

## Description

La présente invention concerne un dispositif anti-patinage et anti-blocage des roues d'un véhicule équipé d'un système de freinage comprenant un ou plusieurs cylindres de frein associés, chacun, à au moins une roue, une source de fluide sous pression et une commande de frein apte à être actionnée pour assurer un freinage en alimentant lesdits cylindres en fluide sous pression par au moins une valve de freinage et une conduite de freinage.

On connaît déjà des systèmes de freinage, appliqués en particulier aux véhicules automobiles utilisés sur route, dans lesquels un maître-cylindre de frein est équipé d'un réservoir. Pour le freinage, un volume de fluide qui dépend de l'effort d'actionnement sur la pédale de frein est transféré du réservoir via le maître-cylindre vers le ou les cylindres de frein. Lorsque la pédale est relâchée, le fluide retourne vers le réservoir. Ce dernier est de taille réduite et ces systèmes sont utilisables pour les applications dans lesquelles le transfert d'un très faible volume de fluide suffit à l'actionnement d'un cylindre de frein. Certains véhicules automobiles sont dotés, en outre, d'un système anti-patinage et d'un système anti-blocage. Le système anti-blocage, commandé par des électrovalves à action rapide, consiste à faire diminuer la pression de fluide dans le cylindre de frein dès qu'une roue à laquelle ce cylindre est associé tend à se bloquer. Le système anti-patinage utilise une source de fluide sous pression auxiliaire qui, lorsqu'une roue tend à patiner, est mise à contribution pour la freiner en alimentant le cylindre de frein associé à cette roue.

Pour des engins de taille plus importante, en particulier des engins agricoles et des engins de travaux publics, les volumes de fluide devant être transférés dans les cylindres de frein pour opérer le freinage sont beaucoup plus élevés. Par conséquent, les circuits de freinage comprennent en général une source de pression qui, par l'intermédiaire d'une valve de débit prioritaire et d'un conjoncteur-disjoncteur, sert à alimenter des accumulateurs de fluide. Le fluide utilisé pour alimenter les cylindres de frein provient de ces accumulateurs, qui sont éloignés de ces cylindres.

WO 92/03321 propose un dispositif anti-blocage et anti-patinage selon le préambule de la revendication 1. Ce dispositif utilise, pour chaque roue freinée, une valve de commande à deux positions apte à raccorder le cylindre de frein à une conduite de freinage reliée à une alimentation en fluide de freinage ou à une conduite de liaison reliée à une valve supplémentaire associée à cette roue.

En cas de blocage de cette roue, la valve de commande raccorde le cylindre de frein à la conduite de liaison et la valve supplémentaire permet, lorsqu'elle est au repos, l'évacuation de la pression du cylindre de frein vers une vidange. Lorsque cette pression a suffisamment diminué, la valve supplémentaire doit être commandée pour relier la conduite de liaison à une source auxiliaire de pression et reprendre ainsi le freinage.

En cas de patinage de la roue, la valve de commande raccorde également le cylindre de frein à la conduite de liaison qui est reliée à la valve supplémentaire et cette dernière doit être commandée pour relier la conduite de liaison à la source auxiliaire de pression et freiner ainsi la roue qui patine ou pour, au contraire, relier la conduite de liaison à la vidange et éviter un freinage excessif de cette roue.

Ce dispositif et son fonctionnement sont relativement complexes. De plus, la reprise du freinage de la roue après une situation de blocage de cette roue n'est pas assurée par la conduite de freinage, de sorte que le niveau de freinage ne peut pas être normalement commandé par l'opérateur.

L'invention vise à remédier à ces inconvénients en proposant un dispositif anti-patinage et anti-blocage des roues d'un véhicule qui s'intègre dans un système de freinage classique, sans interférer sur le freinage, et de manière simple et peu onéreuse.

Ce but est atteint grâce au fait que le dispositif de l'invention comporte un sélecteur de fonction susceptible d'adopter une position de mode anti-patinage dans laquelle il relie une conduite de branchement à une alimentation en fluide et une position de mode anti-blocage dans laquelle il relie une conduite de branchement à une vidange, de sorte que la conduite de branchement à laquelle la valve de commande relie le cylindre de frein associé dans sa position de mode particulier est elle-même reliée à la vidange ou à l'alimentation en fluide selon la position du sélecteur de fonction et au fait que la valve de commande du ou de chaque cylindre de frein est une valve progressive apte à être commandée de telle sorte que, lorsque le sélecteur de fonction est dans sa position de mode anti-patinage, la commande de la valve de commande permet de doser un effort de freinage pour maîtriser une situation de patinage et que, lorsque le sélecteur de fonction est dans sa position de mode anti-blocage, la commande de la valve de commande permet de doser le relâchement du freinage d'une roue.

Une situation de tendance au blocage d'une roue est celle dans laquelle, au cours du freinage, la vitesse de cette roue devient nulle ou quasi-nulle, alors que le véhicule n'est pas encore immobilisé. Elle peut être détectée en comparant la vitesse de cette roue à la vitesse moyenne du véhicule.

Avec l'invention, le freinage d'une roue s'opère de manière habituelle lorsque la valve de commande associée au cylindre de frein associé à cette roue est dans sa position de freinage normal. En effet, dans ce cas, le cylindre peut être alimenté en fluide par la conduite de freinage.

La valve de commande associée au cylindre de frein associé à cette roue peut toutefois être commandée dans sa position de mode particulier, dans laquelle elle relie le cylindre à une conduite de branchement qui, lorsque le sélecteur de fonction est dans sa position de mode anti-blocage, est reliée à une vidange. Ainsi, lorsque, le sélecteur de fonction étant dans sa position de mode anti-blocage, on détecte une situation de tendance au blocage de la roue au cours d'un freinage, il suffit de commander la valve de commande associée au cylindre de frein associé à cette roue pour l'amener dans sa position de mode particulier, dans laquelle elle relie le cylindre à la conduite de branchement qui est reliée à la vidange par le sélecteur de fonction. En conséquence, la pression de fluide diminue dans le cylindre de frein de la roue considérée et le blocage de celle-ci peut cesser ou être évité.

Lorsque, au contraire, le sélecteur de fonction est dans sa position de mode anti-patinage, il relie une conduite de branchement (la même que celle qui est évoquée ci-dessus ou une autre) à une alimentation en fluide. Lorsque, au cours d'un déplacement du véhicule, on détecte une situation de patinage d'une roue, il suffit de commander la valve de commande associée au cylindre de frein associé à cette roue pour relier au cylindre de frein associé à cette roue la conduite de branchement qui est elle-même reliée à l'alimentation en fluide par le sélecteur de fonction. Ce cylindre de frein peut donc être alimenté en fluide et la roue qui patine peut être freinée.

Ainsi, l'invention peut utiliser un seul sélecteur de fonction pour l'ensemble du véhicule et, pour le cylindre de frein ou chacun des cylindres de frein qui sont, chacun, associés à au moins une roue, une valve de commande unique pour réaliser les fonctions d'anti-blocage et d'anti-patinage. La commande du sélecteur de fonction permet de placer celui-ci en situation d'attente, soit en mode anti-patinage, dans lequel il peut être remédié au patinage d'une roue par une simple commande de la valve de commande associée au cylindre de frein associé à cette de cette roue, soit en mode anti-blocage dans lequel on peut éviter le blocage d'une roue au cours d'un freinage par la commande de la valve de commande associée au cylindre de frein associé à cette roue. Le freinage d'une roue ayant tendance à patiner est dosé par la commande de la valve de commande associée au cylindre de freinage de cette roue. Le relâchement et la reprise du freinage d'une roue ayant tendance à se bloquer sont également dosés par la commande de la valve de commande associée au cylindre de frein de cette roue, la reprise du freinage s'opérant par la conduite de freinage, en fonction du niveau d'actionnement de la commande de frein par l'opérateur. Le sélecteur de fonction est quant à lui commandé en tout ou rien entre ses différentes positions. Il ne s'agit pas d'une valve progressive.

Les moyens pour détecter une situation de patinage ou de tendance au blocage d'une roue comprennent par exemple un détecteur de vitesse pour chaque roue et un calculateur qui compare les vitesses détectées à une vitesse cible déterminée par exemple comme une vitesse moyenne d'avancement du véhicule. Ces moyens sont par exemple conformes à ceux que divulgue EP-A-0 505 254. Ce calculateur peut être intégré dans une unité de commande qui commande les valves de commande et éventuellement le sélecteur de fonction sur la base des données calculées par le calculateur.

Le sélecteur de fonction peut être à commande manuelle ou à commande automatique ou semi-automatique faisant, par exemple, intervenir l'unité de commande précitée.

Un mode de réalisation avantageux se définit par le fait que le sélecteur de fonction comprend une voie d'alimentation reliée à l'alimentation en fluide, une voie de vidange et une voie de sortie reliée à la conduite de branchement, par le fait que, pour chaque cylindre de frein, la valve de commande comprend une voie de raccordement au cylindre, une voie de raccordement à la conduite de freinage et une voie de raccordement à la conduite de branchement, et par le fait que, dans la position de mode anti-blocage du sélecteur, la voie de vidange et la voie de sortie sont reliées tandis que la voie d'alimentation est isolée de ces voies, dans la position de mode anti-patinage du sélecteur, la voie d'alimentation et la voie de sortie sont reliées tandis que la voie de vidange est isolée de ces voies, dans la position de freinage normal de la valve de commande, la voie de raccordement au cylindre et la voie de raccordement à la conduite de freinage sont reliées tandis que la voie de raccordement à la conduite de branchement est isolée de ces voies et, dans la position de mode particulier de la valve de commande, la voie de raccordement au cylindre et la voie de raccordement à la conduite de branchement sont reliées tandis que la voie de raccordement à la conduite de freinage est isolée de ces voies.

Selon une première variante de ce mode de réalisation, la même conduite de branchement est utilisée, en mode anti-patinage du sélecteur de fonction pour alimenter un cylindre de frein en fluide par son raccordement avec l'alimentation en fluide, et en mode anti-blocage pour diminuer la pression de fluide dans un cylindre par son raccordement à la vidange.

Selon une deuxième variante, deux conduites de branchement sont utilisées, l'une pour le mode anti-patinage du sélecteur de fonction, l'autre pour le mode anti-blocage.

Cette deuxième variante se définit par le fait que le sélecteur de fonction comprend une voie d'alimentation reliée à l'alimentation en fluide, une voie de vidange, une première voie de sortie reliée à une première conduite de branchement et une deuxième voie de sortie reliée à une deuxième conduite de branchement, pour chaque cylindre de frein, la valve de commande est susceptible d'adopter deux positions de mode particulier, respectivement une position d'anti-blocage et une position d'anti-patinage, et comprend une voie de raccordement au cylindre, une voie de raccordement à la conduite de freinage, une voie de raccordement à la première conduite de branchement et une voie de raccordement à la deuxième conduite de branchement, et par le fait que, dans la position de mode anti-blocage du sélecteur, la voie de vidange et la première voie de sortie sont reliées tandis que la voie d'alimentation est isolée de ces voies, dans la position de mode anti-patinage du sélecteur, la voie d'alimentation et la deuxième voie de sortie sont reliées tandis que la voie de vidange est isolée de ces voies et, dans la position de freinage normal de la valve de commande, la voie de raccordement au cylindre et la voie de raccordement à la conduite de freinage sont reliées tandis que les voies de raccordement aux première et deuxième conduite de branchement sont isolées de ces voies et sont isolées l'une de l'autre, dans la position d'anti-blocage de la valve de commande, la voie de raccordement au cylindre et la voie de raccordement à la première conduite de branchement sont reliées tandis que la voie de raccordement à la conduite de freinage et la voie de raccordement à la deuxième conduite de branchement sont isolées de ces voies et, dans la position d'anti-patinage de ladite valve, la voie de raccordement au cylindre et la voie de raccordement à la deuxième conduite de branchement sont reliées tandis que la voie de raccordement à la conduite de freinage et la voie de raccordement à la première conduite de branchement sont isolées de ces voies et sont isolées l'une de l'autre.

Avantageusement, la position de mode anti-blocage du sélecteur de fonction est une position de repos dudit sélecteur vers laquelle ce dernier est rappelé en permanence, tandis qu'il doit être commandé pour passer de cette position à sa position de mode anti-patinage.

La position de mode anti-blocage du sélecteur de fonction est une position de sécurité, qui améliore la qualité du freinage en évitant le blocage des roues. Il est donc intéressant que cette position soit occupée par défaut par le sélecteur de fonction.

Avantageusement, pour chaque cylindre de frein, la position de freinage normal de la valve de commande est une position de repos de cette valve, vers laquelle cette dernière est rappelée en permanence, tandis qu'elle doit être commandée pour passer de cette position à sa ou ses positions de mode particulier.

Avantageusement, le dispositif comporte au moins un accumulateur de fluide de freinage apte à être alimenté par la source de fluide sous pression et il comporte au moins une valve de freinage susceptible d'être actionnée pour relier la conduite de freinage audit accumulateur.

L'accumulateur peut être alimenté en fluide à partir d'une source de fluide sous pression. Il constitue une réserve de fluide sous pression disponible à tout moment pour réaliser le freinage par actionnement de la valve de freinage à l'aide d'un actionneur tel que, de manière connue, une pédale de frein.

Avantageusement, le dispositif comporte un accumulateur de fluide d'anti-patinage apte à être alimenté par la source de fluide sous pression et à être raccordé à ladite alimentation en fluide du sélecteur de fonction.

Cet accumulateur de fluide d'anti-patinage constitue également une réserve de sécurité de fluide sous pression. De préférence, cet accumulateur est distinct de celui qui sert au freinage par sa liaison avec la conduite de freinage opérée par la valve de freinage.

Avantageusement, la pression de fluide à l'alimentation en fluide du sélecteur de fonction est inférieure à la pression d'alimentation en fluide de la conduite de freinage, ce qui peut être obtenu en raccordant l'accumulateur de fluide d'anti-patinage précité à l'alimentation en fluide par l'intermédiaire d'un réducteur de pression.

En fait, l'alimentation en fluide à laquelle est reliée la voie d'alimentation du sélecteur de fonction peut être une conduite raccordée à l'accumulateur de fluide d'anti-patinage et mettant ainsi en attente, à la voie d'alimentation d'un sélecteur de fonction, une pression de fluide disponible pour assurer la fonction d'anti-patinage. Le réducteur de pression permet de faire en sorte que cette pression de fluide en attente soit contrôlée et constante, même si, après une sollicitation d'anti-patinage, la pression de fluide dans l'accumulateur d'anti-patinage a diminué. Il convient de relever que l'on pourrait concevoir que l'alimentation en fluide soit reliée à la conduite de refoulement d'une pompe, sans passer par un accumulateur. Dans ce cas également, la présence d'un réducteur de pression est avantageuse dans la mesure où elle permet de mettre en attente une pression de fluide stabilisée à la voie d'alimentation du sélecteur de fonction.

L'invention sera bien comprise et ses avantages apparaîtront mieux à la lecture de la description détaillée qui suit, d'un mode de réalisation représenté à titre d'exemple non limitatif.

La description se réfère aux dessins annexés, sur lesquels:
- les figures 1 à 3 montrent un circuit de freinage intégrant un dispositif conforme à l'invention, selon trois variantes ; et
- les figures 4 à 6 montrent une valve de commande selon l'invention, dans trois positions respectives.

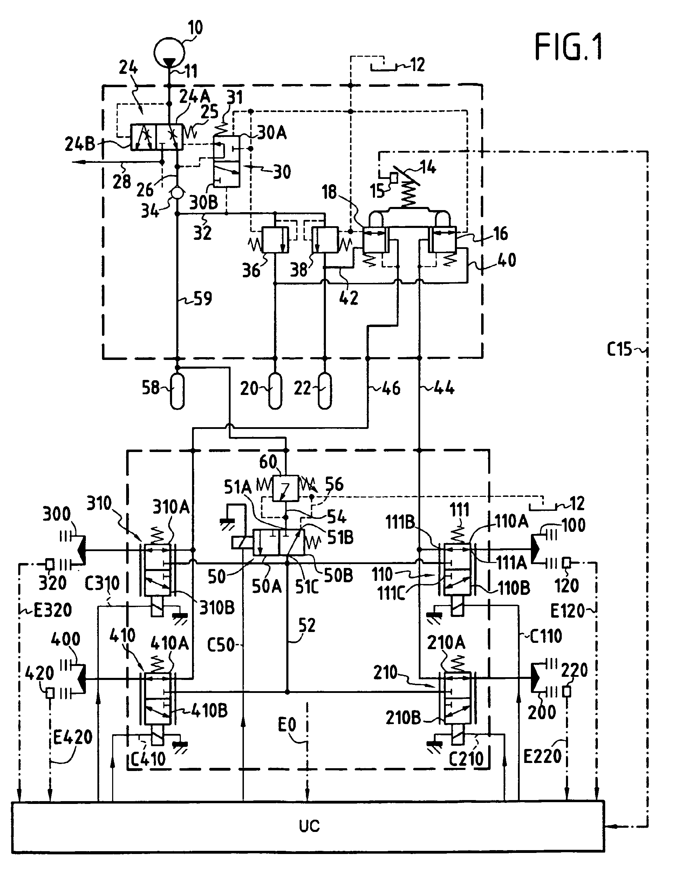

Le circuit de freinage représenté sur les figures 1 à 3 sert au freinage d'un véhicule ayant quatre roues équipées, chacune, d'un cylindre de frein, respectivement 100, 200, 300 et 400.

Le circuit de freinage est un circuit de type ouvert comprenant une pompe 10 de refoulement de fluide sous pression et un réservoir à la pression atmosphérique 12. Dans l'exemple représenté, le circuit est scindé en deux sous-circuits de freinage (par exemple un sous-circuit par essieu) servant respectivement au freinage des roues associées, d'une part, aux cylindres 100 et 200 et à celui des roues associées, d'autre part, aux cylindres 300 et 400. La commande de frein est une pédale 14, qui, lorsqu'elle est actionnée, commande une valve de freinage 16 pour le freinage des roues associées aux cylindres 100 et 200 et une valve de freinage 18 pour le freinage des roues associées aux cylindres 300 et 400. Bien entendu, l'invention s'applique également à un circuit comprenant une seule valve de freinage pour les cylindres de frein ou encore à un circuit comprenant plus de deux sous-circuits. En l'espèce, la valve de freinage 16, 18 est constituée par un réducteur de pression à tarage variable qui génère une pression proportionnelle à l'effort exercé sur la pédale 14.

De manière connue en soi, la pompe 10 peut alimenter en fluide des accumulateurs de fluide de freinage, respectivement 20 et 22, auxquels sont respectivement reliées les valves de freinage 16 et 18.

Par exemple, la pompe 10 est une pompe auxiliaire qui sert à la commande des organes de direction et/ou à celle d'accessoires ou d'outils du véhicule. Une valve de débit prioritaire 24 est placée sur la conduite de refoulement 11 de cette pompe 10. Dans sa position de repos, représentée sur les figures, cette valve relie la conduite de refoulement 11 à une conduite 26 d'alimentation en fluide des accumulateurs.

Dans sa première position 24A, la valve 24 relie la conduite de refoulement 11 seulement à la conduite 26 afin de charger en fluide les accumulateurs. Dans sa deuxième position 24B, la valve 24 continue de relier la conduite de refoulement 11 à la conduite 26 par une voie ayant une restriction, mais elle relie prioritairement cette conduite de refoulement à une conduite auxiliaire 28 par une voie sans restriction.

Cette conduite 28 sert à assurer des fonctions auxiliaires prioritaires du véhicule telles que mentionnées ci-dessus, en particulier la commande des organes de direction.

Le circuit de freinage comporte également une valve 30 dite conjoncteur-disjoncteur.

Dans sa première position 30A représentée sur les figures, le conjoncteur-disjoncteur 30 sollicite la valve 24 dans sa première position 24A en ramenant dans une première chambre de commande de cette valve une pression de fluide prélevée dans la conduite 26, pour ajouter cette pression à l'effort exercé par un ressort de rappel 25 qui sollicite constamment la valve 24 vers sa première position 24A. La position 30A est la position de conjonction.

Dans sa deuxième position 30B, dite de disjonction, le conjoncteur-disjoncteur 30 fait communiquer la chambre de commande précédemment évoquée avec le réservoir à la pression atmosphérique 12. La valve 24 peut donc occuper sa position 24B en étant sollicitée vers cette deuxième position par l'alimentation d'une deuxième chambre de commande, d'effet antagoniste à celui du ressort 25 et de la première chambre de commande, par du fluide prélevé sur la conduite de refoulement 11.

Le conjoncteur-disjoncteur 30 occupe naturellement sa position de conjonction 30A dans laquelle il est rappelé constamment par un ressort 31, ce qui permet à la valve 24 d'occuper naturellement sa première position 24A pour charger les accumulateurs en fluide, en particulier au démarrage. Lorsque la pression dans ces accumulateurs atteint un premier seuil, le conjoncteur-disjoncteur 30 est commandé dans sa deuxième position 30B par alimentation d'une chambre de commande d'effet antagoniste à celui du ressort 31, par du fluide provenant d'une conduite 32 d'alimentation des accumulateurs, qui est reliée à la conduite 26 par un clapet anti-retour 34 autorisant seulement la circulation de fluide de la pompe 10 vers les accumulateurs.

Les accumulateurs 20 et 22 sont chacun reliés à la conduite 32 par l'intermédiaire d'une soupape d'isolement, respectivement 36 et 38, qui constitue un dispositif de sécurité permettant d'isoler un sous-circuit défaillant. Les valves de freinage 16 et 18 sont reliées aux accumulateurs 20 et 22 en aval de ces limiteurs de pression, respectivement par les conduites 40 et 42. Lorsque la pédale de frein 14 est actionnée, elle sollicite les valves 16 et 18 pour alimenter en fluide de freinage des conduites de freinage, respectivement 44 et 46, ces valves raccordant ces conduites de freinage aux conduites respectives 40 et 42.

Lorsque la pression dans les accumulateurs diminue jusqu'à atteindre un deuxième seuil, l'effort du ressort 31 devient prépondérant et ramène le conjoncteur-disjoncteur dans sa position 30A pour permettre la recharge des accumulateurs.

Dans la variante de la figure 1, le dispositif de l'invention comprend un sélecteur de fonction 50 ayant au moins deux positions. Sa position 50A est une position de mode anti-patinage dans laquelle il relie une conduite de branchement 52 à une conduite 54 d'alimentation en fluide. La deuxième position 50B du sélecteur est une position de mode anti-blocage dans laquelle il relie la conduite de branchement 52 à une vidange 56 reliée au réservoir 12. Ce sélecteur comprend en effet une voie d'alimentation 51A qui est reliée à la conduite 54, une voie de vidange 51B qui est reliée au réservoir à la pression atmosphérique 12 et une voie de sortie 51C qui est reliée à la conduite de branchement 52.

L'alimentation en fluide 54 est alimentée par la même source de pression que le circuit de freinage. En effet, la conduite 54 est reliée à la conduite 32 précédemment citée par une conduite de liaison 59, elle-même reliée à un accumulateur de fluide d'anti-patinage 58 qui est alimenté par la pompe 10. L'accumulateur 58 est donc chargé en fluide de la même manière que les accumulateurs 20 et 22 précédemment évoqués en fonction de la position du conjoncteur-disjoncteur 30 et de celle de la valve de débit prioritaire 24.

Avantageusement, la pression de fluide dans la conduite 54 est inférieure à la pression d'alimentation en fluide dans la ou les conduites de freinage 44 et 46. En effet, la pression de fluide en attente dans l'alimentation 54, à la voie d'alimentation 51A du sélecteur 50 sert à freiner légèrement une roue qui tend à patiner. Le couple de freinage, devant être développé n'est pas nécessairement aussi élevé que celui qui sert à immobiliser le véhicule.

Pour qu'une pression de fluide stabilisée soit en attente à la voie d'alimentation 51A, l'accumulateur de fluide d'anti-patinage 58 est raccordé à l'alimentation en fluide 54 par l'intermédiaire d'un réducteur de pression 60. Ce réducteur de pression peut être taré en fonction des caractéristiques du véhicule, en prenant en compte des paramètres tels que la masse de ce véhicule et la puissance de son ou de ses moteurs. Par exemple, la pression du fluide stockée dans les accumulateurs 20 et 22 et utilisée dans les conduites de freinage 44 et 46 pour le freinage peut être comprise entre 120 et 140 bar. C'est également la pression du fluide qui peut être stockée dans l'accumulateur 58. Selon le type de véhicule, le réducteur de pression 60 peut être réglé pour que la pression en attente dans l'alimentation en fluide 54 soit stabilisée à une valeur comprise entre 50 et 100 bar.

A chaque cylindre de frein est associée une valve de commande, respectivement 110, 210, 310 et 410. Pour les cylindres 100, 200, 300 et 400, chacune de ces valves peut occuper une position de freinage normal, respectivement 110A, 210A, 310A et 410A dans laquelle elle relie le cylindre de frein auquel elle est associée à une conduite de freinage, respectivement 44 pour les valves 110 et 210 et 46 pour les valves 310 et 410.

Chaque valve de commande peut également occuper une position dite de mode particulier, respectivement 110B, 210B, 310B et 410B dans laquelle elle relie le cylindre auquel elle est associée à la conduite de branchement 52.

Dans l'exemple de la figure 1, chaque valve de commande comprend, à l'instar de la valve 110, une voie 111A de raccordement au cylindre à laquelle elle est associée, une voie 111B de raccordement à la conduite de freinage (44 pour les valves 110 et 210, ou 46 pour les valves 310 et 410) et une voie 111C de raccordement à la conduite de branchement 52.

Dans la position de freinage normal 110A de la valve 110, les voies 111A et 111B sont reliées, tandis que la voie 111C en est isolée. Au contraire, dans la position de mode particulier 110B, les voies 111A et 111C sont reliées, tandis que la voie 111B est isolée.

Lorsque le sélecteur 50 occupe sa position de mode anti-blocage 50B, la voie de vidange 51B et la voie de sortie 51C de ce sélecteur sont reliées, tandis que la voie d'alimentation 51A est isolée de ces voies. Dans ces circonstances lorsque, à l'occasion d'un freinage (les valves de commande 110, 210, 310 et 410 étant dans leur position de freinage normal), on détecte une situation de tendance au blocage pour l'une des roues, par exemple celle qui est associée au cylindre 100, il suffit de commander la valve 110 associée à ce cylindre pour la placer dans sa position de mode particulier 110B. La voie de raccordement au cylindre 111A de cette valve se trouve alors automatiquement raccordée à la vidange 56 par sa liaison avec la voie 111C elle-même reliée à la conduite de branchement 52. La pression dans le cylindre de frein diminue et le blocage de la roue cesse.

Dans la position de mode anti-patinage 50A du sélecteur 50, la voie d'alimentation 51A et la voie de sortie 51C de ce sélecteur sont reliées, tandis que la voie de vidange 51B en est isolée. Dans ces circonstances, lorsque le véhicule circule sans être freiné et que l'on constate une situation de patinage de l'une des roues, par exemple celle qui est associée au cylindre 100, il suffit de commander la valve 110 associée à ce cylindre, pour la placer dans sa position de mode particulier 110B. Ceci a pour effet de relier le cylindre 100 à la conduite de branchement 52 qui est elle-même reliée à l'alimentation en fluide 54 puisque les voies 51A et 51C sont reliées. La pression qui est en attente dans la conduite 54 peut donc alimenter le cylindre 100 et freiner la roue qui patine.

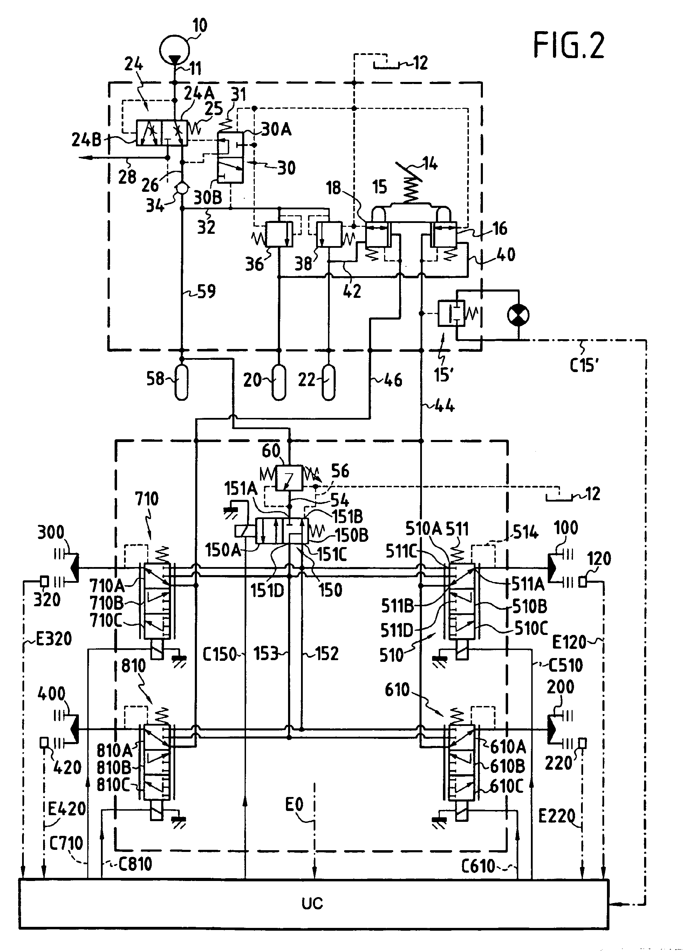

La variante de la figure 2 diffère de celle de la figure 1 par la conformation du sélecteur de fonction 150 et par celle des valves de commande 510, 610, 710 et 810. Sur la figure 2, les éléments inchangés par rapport à ceux de la figure 1 sont désignés par les mêmes références.

Le sélecteur de fonction 150 comprend une voie d'alimentation 151A qui est reliée à l'alimentation en fluide 54, une voie de vidange 151B qui est reliée à la vidange 56, une première voie de sortie 151C qui est reliée à une première conduite de branchement 152 et une deuxième voie de sortie 151D qui est reliée à une deuxième conduite de branchement 153.

Pour chaque cylindre de frein 100, 200, 300 et 400, la valve de commande respectivement 510, 610, 710 et 810 est susceptible d'adopter une position de freinage respectivement 510A, 610A, 710A et 810A, une position de mode particulier qui est une position d'anti-blocage, respectivement 510B, 610B, 710B et 810B, ainsi qu'une autre position de mode particulier qui est une position d'anti-patinage, respectivement 510C, 610C, 710C et 810C.

Les valves de commande 510, 610, 710 et 810 sont identiques. On décrit plus en détail la valve 510 à titre d'exemple.

Elle comprend une voie 511A de raccordement au cylindre, une voie 511B de raccordement à la conduite de freinage, une voie 511C de raccordement à la première conduite de branchement et une voie 511D de raccordement à la deuxième conduite de branchement.

Dans la position de freinage normal 510A de la valve 510, sa voie de raccordement au cylindre 511A et sa voie de raccordement à la conduite de freinage 511B sont reliées, tandis que les voies de raccordement aux première et deuxième conduites de branchement 511C et 511D sont isolées de ces voies.

Dans sa position d'anti-blocage 510B, sa voie de raccordement au cylindre 511A et sa voie de raccordement à la première conduite de branchement 511C sont reliées, tandis que sa voie de raccordement à la conduite de freinage 511B et sa voie de raccordement à la deuxième conduite de branchement 511D sont isolées de ces voies. Elles sont également isolées entre elles.

Enfin, dans la position d'anti-patinage 510C de cette valve, sa voie de raccordement au cylindre 511A et sa voie de raccordement à la deuxième conduite de branchement 511D sont reliées, tandis que sa voie de raccordement à la conduite de freinage 511B et sa voie de raccordement à la première conduite de branchement 511C sont isolées de ces voies. Elles sont également isolées entre elles.

Le sélecteur 150 peut occuper une position de mode anti-patinage 150A et une position de mode anti-blocage 150B. Dans la position de mode anti-patinage, la voie d'alimentation 151A et la deuxième voie de sortie 151D sont reliées entre elles, tandis que la voie de vidange 151B est isolée de ces voies. En l'espèce, dans cette position, la première voie de sortie 151C est reliée à la voie de vidange 151B. Dans la position 150B de mode anti-blocage du sélecteur, la voie de vidange 151B et la première voie de sortie 151C sont reliées, tandis que la voie d'alimentation 151A est isolée de ces voies. En l'espèce, dans cette position de mode anti-blocage, la deuxième voie de sortie 151D est également reliée à la voie de vidange 151B.

Lorsque le sélecteur 150 est dans sa position de mode anti-blocage 150B et lorsque, à l'occasion d'un freinage, on détecte une tendance au blocage de l'une des roues, par exemple la roue associée au cylindre 100, il suffit de commander la valve de commande 510 pour la faire passer de sa position de freinage normal 510A à sa position d'anti-blocage 510B de manière à faire baisser la pression dans le cylindre de frein et faire ainsi cesser la tendance au blocage de cette roue. En effet, dans ce cas, le passage de la valve 510 dans sa position 510B fait communiquer le cylindre 100 avec la vidange 56.

En situation de conduite dans laquelle des risques de patinage peuvent survenir, on commande le sélecteur 150 dans sa position de mode anti-patinage 150A. Si une roue patine, par exemple la roue associée au cylindre 100, il suffit de commander la valve de commande 510 pour la placer dans sa position d'anti-patinage 510C de manière à alimenter le cylindre 100 avec la pression de fluide en attente dans l'alimentation en fluide 54 du fait de la liaison entre la voie de raccordement au cylindre 511A et la voie 511D de raccordement à la deuxième conduite de branchement 153 qui, dans la position 150A du sélecteur 150, est reliée à l'alimentation en fluide 54. La pression augmente ainsi dans le cylindre 100 qui peut freiner la roue qui patinait.

Chacune des valves de commande 510, 610, 710 et 810 est apte à être commandée pour régler la pression de fluide dans le cylindre auquel elle est associée, en fonction de la commande de ladite valve. Chacune de ces valves comporte des moyens formant réducteur de pression à double action. En effet, lors du contrôle du patinage, la valve est apte, par la voie 511A, à alimenter le cylindre en fluide à une pression proportionnelle au signal de commande de cette valve en jouant ainsi le rôle d'un réducteur de pression car elle alimente le cylindre en fluide à une pression inférieure à celle qui est disponible. Ceci permet de freiner la roue qui patinait avec une pression adaptée à la situation.

Lors du contrôle d'une tendance au blocage, la valve de commande est apte à délester le cylindre en pression proportionnellement à son signal de commande en jouant ainsi le rôle d'un limiteur de pression dans le cylindre.

Comme indiqué pour la valve 510, la commande de cette valve prend en compte la pression dans le cylindre par une conduite 514.

Dans l'exemple représenté, les positions anti-blocage 510B et anti-patinage 510C sont adjacentes. Plus précisément, la valve de commande passe par sa position d'anti-blocage entre sa position de freinage normal et sa position d'anti-patinage.

La progressivité de chaque valve de commande fait que les sections de communication entre les voies de cette valve et les conduites qui leur sont raccordées varient progressivement lors du déplacement de cette valve entre ces deux positions.

On a vu que, lorsque le sélecteur 150 est dans sa position de mode anti-patinage 150A, les voies 151A et 151D sont reliées entre elles, de sorte que la pression d'attente règne dans la deuxième conduite de branchement 153, tandis que les voies 151C et 151B sont reliées entre elles, de sorte que la première conduite de branchement 152 est reliée à la vidange 56.

Dans ces conditions, on peut réaliser la régulation de la pression dans le cylindre 100 évoquée ci-dessus lorsque le sélecteur 150 est dans sa position de mode anti-patinage.

En effet, la progressivité de la valve 510 permet, lors de son déplacement, de faire varier la section de communication entre ses voies 511A et 511C pour régler le délestage du cylindre puisque cette voie 511C est reliée à la vidange 56 par la conduite de branchement 152 et de faire varier la section de communication entre les voies 511A et 511D pour régler l'augmentation de pression dans le cylindre puisque cette voie 511D est reliée à l'alimentation 54 par la conduite de branchement 153, ceci jusqu'à ce que la pression dans le cylindre de frein prise en compte par la conduite 514 corresponde à la consigne de commande.

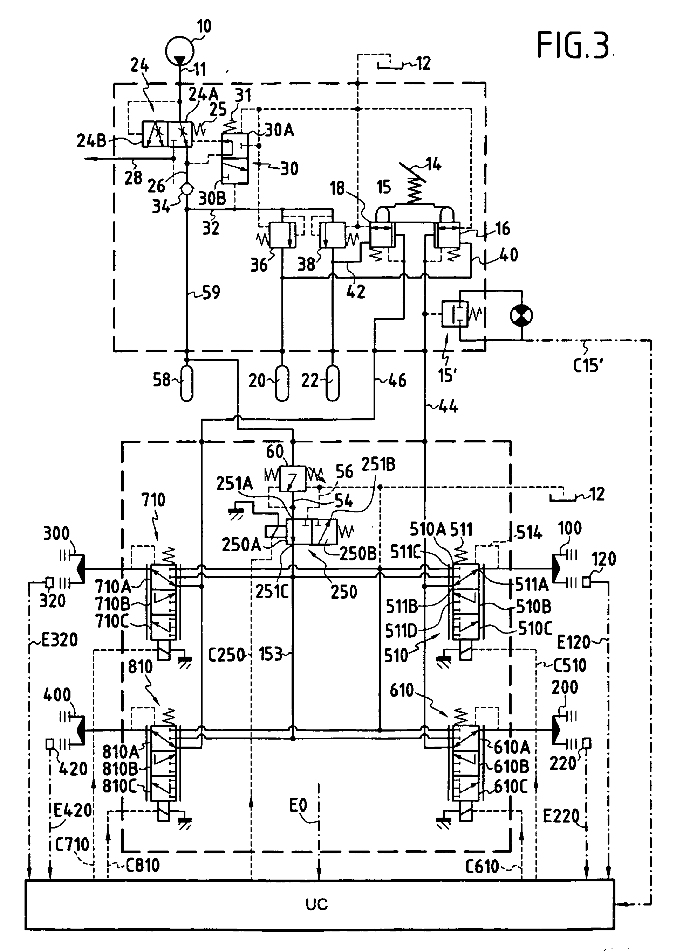

La figure 3 montre une variante du circuit de la figure 2, les éléments inchangés par rapport à la figure 2 étant désignés par des références inchangées.

Le sélecteur 250 à deux positions du circuit de la figure 3 présente une voie d'alimentation 251A qui est reliée à la conduite d'alimentation 54, une voie de vidange 251B qui est reliée au réservoir 12 et une voie de sortie 251C qui est reliée à la conduite de branchement 153.

Les valves de commande 510, 610, 710 et 810 sont les mêmes que celles du circuit de la figure 2. Toutefois, l'une des voies de chacune de ces valves, telle la voie 511C de la valve 510, est reliée en permanence au réservoir à la pression atmosphérique 12.

La figure 3 montre le sélecteur de fonction dans sa position de mode anti-patinage 250A, dans laquelle ses voies 251A et 251C communiquent de manière à raccorder la conduite de branchement 153 à la pression en attente dans la conduite 54.

Ainsi, lorsqu'une situation de patinage d'une roue est détectée, la valve de commande associée au cylindre de frein de cette roue, par exemple la valve 510, est commandée pour adopter sa position d'anti-patinage 510C de manière à alimenter le cylindre de frein par la pression à sa voie 511D qui communique avec la conduite 153.

Dans sa position de mode anti-bloc age 250B, le sélecteur de fonction 250 relie la conduite 153 au réservoir à la pression atmosphérique par ses voies 251B et 251C qui communiquent, de sorte que la pression d'anti-patinage n'est plus en attente à la voie 511D, la conduite 153 ne communiquant plus avec la conduite 54.

Dans cette situation, l'anti-blocage de la roue dont le cylindre de frein est associé à la valve 510 peut être réalisé en amenant cette valve dans sa position 510B dans laquelle ses voies 511A et 511C communiquent, la voie 511C étant reliée en permanence au réservoir 12.

Dans la mesure où cette liaison de la voie 511C avec le réservoir 12 est permanente, lorsque le sélecteur de fonction est dans sa position de mode anti-patinage, la valve 510 peut osciller entre ses positions 510B et 510C pour réaliser un anti-patinage sans risque de blocage comme décrit précédemment en relation avec la figure 2.

Dans les variantes des figures 1 et 2, pour chaque cylindre de frein, la position de freinage normal de la valve de commande est une position de repos de cette valve dans laquelle celle-ci est rappelée en permanence, tandis qu'elle doit être commandée pour passer de cette position à sa ou ses positions de mode particulier. Ainsi, par exemple, la valve 110 de la figure 1 et la valve 510 de la figure 2 sont constamment rappelées vers leurs positions de freinage normal par un ressort de rappel, respectivement 111 et 511.

Comme le sélecteur 50, le sélecteur 150 est naturellement rappelé au repos vers sa position de mode anti-blocage 150B, tandis qu'il doit être commandé pour passer de cette position à sa position de mode anti-patinage 150A.

Sur les figures 1 et 2, les sélecteurs de fonction, de même que les valves de commande, sont des électrovalves qui sont commandées par une unité de commande électronique UC. Cette unité reçoit en entrée les différents paramètres de fonctionnement du véhicule et commande en conséquence le sélecteur de fonction et les valves de commande.

Le dispositif conforme à l'invention comprend des moyens pour détecter la vitesse à chacune des roues du véhicule qui sont associées à un cylindre de frein, des moyens pour déterminer une vitesse cible pour chacune de ces roues et des moyens pour comparer la vitesse détectée à la vitesse cible et pour en déduire l'existence d'une situation de patinage ou de tendance au blocage d'une roue. En effet, un détecteur de vitesse, respectivement 120, 220, 320 et 420, de type connu en soi, peut être associé à chaque roue pour détecter sa vitesse de rotation. Sans que ceci soit limitatif, il peut s'agir d'un capteur inductif, capacitif ou magnéto-résistif ou bien, lorsque chaque roue est entraînée par un moteur hydraulique, d'un capteur de débit de fluide utilisé dans ce moteur. Ces détecteurs sont reliés à l'unité de commande UC par des lignes d'entrée, respectivement E120, E220, E320 et E420.

Cette unité de commande est apte à déterminer une vitesse cible pour chacune des roues. Pour ce qui est de la détermination de la vitesse cible, on pourra se reporter au document EP-A-0 505 254. Par exemple, cette vitesse cible peut être déterminée comme une vitesse moyenne calculée sur la base des vitesses de rotation des différentes roues, en excluant les vitesses de rotation qui sortent d'un schéma de vraisemblance (du fait du blocage d'une roue ou du patinage d'une roue). Le calcul de la vitesse cible pourra en outre subir des corrections prenant en compte, par exemple, l'angle de braquage des roues directrices ou d'autres paramètres justifiant que les roues aient des vitesses angulaires différentes tels qu'une différence de diamètre des roues. La vitesse cible peut être calculée à partir de la vitesse du véhicule mesurée par un radar.

La vitesse cible peut également être calculée en fonction de la vitesse désirée par l'opérateur selon le degré d'actionnement de l'accélérateur du véhicule. L'unité de commande UC comprend des moyens de calcul qui lui permettent de comparer la vitesse détectée pour chaque roue à cette vitesse cible et elle en déduit l'existence d'une situation de patinage ou de tendance au blocage d'une roue en constatant que la vitesse détectée pour une roue est très éloignée (trop élevée ou, au contraire, trop faible voire nulle) de la vitesse cible calculée.

La tendance au blocage peut être détectée par la variation de l'écart des vitesses avec la vitesse cible.

Si le sélecteur de fonction 50 ou 150 est dans sa position de mode anti-blocage 50B ou 150B et qu'une situation de tendance au blocage d'une roue est détectée, l'unité de commande UC peut, par une ligne de commande, respectivement C110, C210, C310 et C410 pour les valves de la figure 1 et C510, C610, C710 et C810 pour celles de la figure 2, commander la valve de commande associée au cylindre de frein de la roue considérée, de manière à relier ce cylindre à la vidange et à faire cesser la situation de tendance au blocage.

De même, si le sélecteur 50 ou 150 est dans sa position de mode anti-patinage 50A ou 150A et qu'une situation de patinage d'une roue est détectée, alors l'unité de commande UC peut commander la valve de commande associée au cylindre de frein de la roue considérée pour la faire passer dans sa position de mode anti-patinage (position unique de mode particulier 110B, 210B, 310B ou 410B pour la figure 1, ou bien position de mode anti-patinage 510C, 610C, 710C ou 810C pour la figure 2).

Dans les deux cas, cette commande cesse pour ramener la valve dans sa position de freinage normal lorsque la vitesse détectée pour la roue qui avait tendance à se bloquer ou qui patinait redevient conforme à la vitesse cible.

Le passage du sélecteur de fonction 50 ou 150 entre sa position de mode anti-blocage 50B ou 150B et sa position de mode anti-patinage 50A ou 150A peut être commandé manuellement.

On peut également prévoir que l'unité de commande UC soit apte à commander le passage du sélecteur de fonction entre sa position de mode anti-blocage et sa position de mode anti-patinage en fonction des vitesses de roues et de leur vitesse cible.

Par exemple, par une ligne d'entrée EO, l'unité de commande UC peut recevoir un ordre de l'opérateur pour lui commander de faire passer le sélecteur de fonction 50 ou 150 entre l'une et l'autre de ses positions. Pour cela, l'unité UC est reliée au sélecteur 50 ou 150 par une ligne de commande C50 ou C150.

Avantageusement, l'unité de commande UC est apte à commander le passage du sélecteur de fonction 50 ou 150 entre sa position de mode anti-blocage et sa position de mode anti-patinage en fonction des vitesses détectées des roues et de leurs vitesses cibles tant que ces vitesses cibles restent inférieures à une valeur seuil déterminée, tandis que le passage du sélecteur de fonction de sa position de mode anti-blocage à sa position de mode anti-patinage ne peut être commandé que manuellement lorsque les vitesses cibles dépassent cette valeur seuil. Par exemple, la valeur seuil est de l'ordre de 15 à 20 km/h.

En dessous de cette valeur de vitesse, le véhicule, qui peut être un engin de chantier ou un engin agricole, circule souvent dans des conditions difficiles, par exemple sur un terrain gras, dans lesquelles les risques de patinage sont élevés. Il est donc intéressant que l'unité de commande automatiquement le sélecteur de fonction dans sa position de mode anti-patinage pour de telles vitesses, pour lesquelles les situations de patinage sont relativement fréquentes. Pour de telles vitesses, le mode « par défaut » est donc le mode anti-patinage.

En revanche, pour des vitesses plus élevées, la commande délivrée par la ligne C50 ou C150 par l'unité de commande peut cesser, ce qui a pour effet de faire revenir le sélecteur 50 ou 150 dans sa position de mode anti-blocage. En effet, à de telles vitesses élevées, l'opérateur peut être amené à opérer un freinage brusque pour éviter un obstacle et c'est dans de telles circonstances que le mode anti-blocage est utile. Ainsi, pour de telles vitesses, le mode « par défaut » est le mode anti-blocage.

On peut également prévoir que, même lorsque, par exemple à l'occasion d'un fonctionnement à faible vitesse, le sélecteur est placé dans sa position de mode anti-patinage par l'unité de commande, la commande du frein par l'opérateur, en particulier par l'appui sur la pédale 14, fasse passer automatiquement le sélecteur de fonction dans sa position de mode anti-blocage afin que la fonction anti-blocage puisse être activée au cours du freinage si cela s'avère nécessaire par une simple commande de la valve de commande associée au cylindre de frein associé à la roue ayant une tendance au blocage.

Pour cette raison, un détecteur de freinage 15 (figure 1) ou 15' (figure 2) peut être raccordé à l'unité de commande UC par une ligne de commande C15 ou C15'.

Sur la figure 1, le détecteur de freinage est associé à la pédale 14. Sur la figure 2, il s'agit d'un mano-contact à seuil générant un signal par contact lorsque la pression dans la conduite de freinage atteint un seuil. Un capteur de pression lié à la conduite de freinage peut jouer le rôle de détecteur de freinage.

Le dispositif de l'invention peut être utilisé sur des véhicules à transmission mécanique, hydromécanique ou hydrostatique équipés d'un système de freinage assisté par une source de pression auxiliaire.

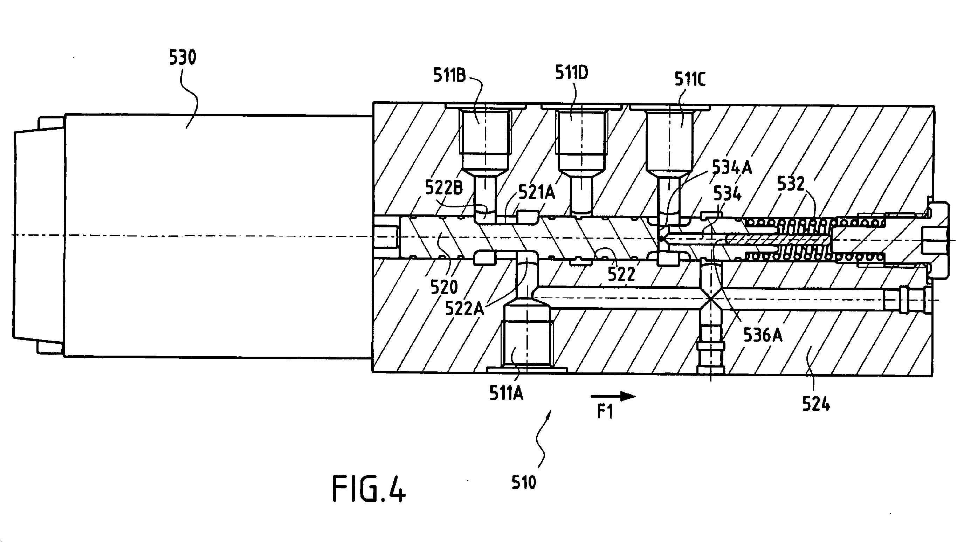

On décrit maintenant les figures 4 à 6 qui représentent un exemple de réalisation pour la valve de commande 510.

Les voies 511A, 511B, 511C et 511D de cette valve servent respectivement au raccordement à un cylindre de frein, à une source de pression de freinage (comme sur la figure 3, par la conduite 44), à une conduite de délestage (comme sur la figure 3 où cette voie est raccordée au réservoir 12) et à une source de pression d'anti-patinage (par exemple par l'intermédiaire de la conduite 153 de la figure 3).

La valve 510 est progressive et comporte un organe mobile 520 formé par un tiroir mobile en translation dans un alésage 522 du corps 524 de la valve.

Le tiroir est mobile entre trois positions qui correspondent respectivement aux positions 510A, 510B et 510C précédemment décrites en référence aux figures 2 et 3.

La valve 510 comporte un actionneur 530, qui peut être électromécanique comme sur les figures 2 et 3, ou de tout type convenable. Il s'agit par exemple d'un actionneur hydraulique ou bien d'un moteur électrique rotatif.

Cet actionneur sert à déplacer le tiroir 520 dans son premier sens de déplacement F1, à l'encontre d'un effort de rappel exercé notamment par un ressort 532. C'est un actionneur proportionnel, c'est-à-dire que l'effort qu'il exerce sur le tiroir 520 pour le déplacer dans le sens F1 est proportionnel à sa commande.

L'actionneur peut être commandé par une unité de commande UC telle que décrite précédemment de manière, notamment, à autoriser une activation ou une désactivation automatique des modes anti-patinage ou anti-blocage par une commande du déplacement du tiroir dans l'une ou l'autre de ses positions en fonction d'une consigne extérieure gérée par l'unité de commande UC.

La figure 4 montre la valve 510 dans sa position de freinage normal 510A dans laquelle la pression de freinage, générée par l'action du conducteur sur la pédale de frein et amenée à la deuxième voie 511B par la conduite de freinage, est transmise à la première voie 511A et donc au cylindre de frein du fait de la communication entre les voies 511A et 511B réalisée par la gorge 521A du tiroir 520, cette gorge étant en regard de l'orifice 522A de l'alésage 522 par lequel la voie 511A communique avec cet alésage et de l'orifice 522B par lequel la voie 511B communique avec l'alésage 522. Les orifices 522A et 522B sont ci-après dénommés "premier orifice de liaison au cylindre de frein" et "orifice de freinage". Le freinage s'opère alors normalement.

La conformation de la valve est telle que lorsque le tiroir est déplacé dans le sens F1 à partir de sa position d'anti-patinage, la section de communication entre les première et quatrième voie augmente et lorsqu'il est déplacé dans le même sens à partir de sa position d'anti-blocage, la section de communication entre les première et troisième voies diminue.

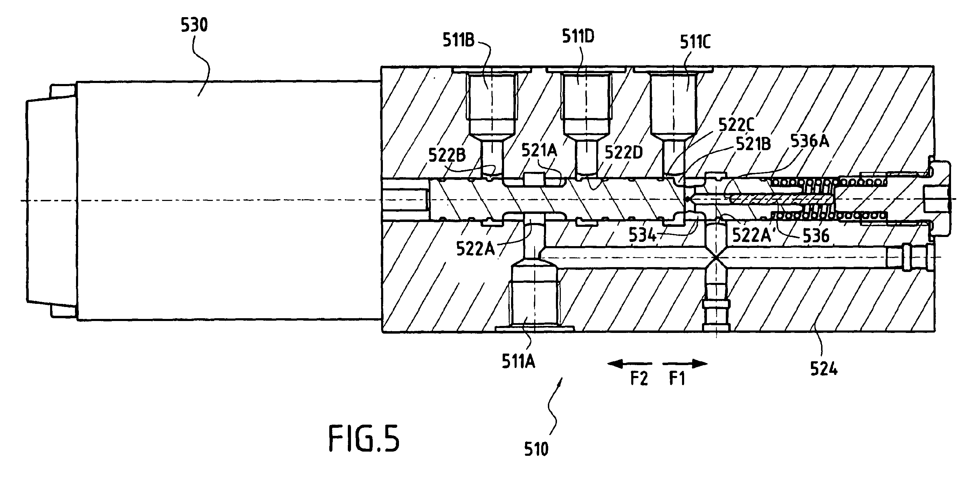

La figure 5 montre cette valve en situation de régulation de l'anti-blocage, dans laquelle cette valve se comporte comme un limiteur de pression vis-à-vis de la pression dans ce cylindre de frein auquel sa première voie est raccordée.

Sur la figure 5, la gorge 521B du tiroir 520 est en regard de l'orifice 522C (ci-après "orifice de délestage") par lequel la voie 511C communique avec l'alésage. En revanche, l'extrémité aval (dans le sens F1) de la gorge 521B est au bord de l'orifice 522A' de l'alésage qui est un deuxième orifice de liaison au cylindre de frein. La gorge 521A est quant à elle en regard de l'orifice 522A et son extrémité amont dans le sens F1 est au bord de l'orifice 522B.

La valve est donc dans une position intermédiaire pour l'anti-blocage dans laquelle, lorsque le tiroir 520 est déplacé dans le sens F1, la communication entre les voies 511A et 511C s'ouvre, permettant ainsi le délestage du cylindre de frein et dans laquelle, lorsque le tiroir est déplacé dans le sens contraire F2, c'est la communication entre les voies 511A et 511B qui s'ouvre, permettant ainsi le freinage.

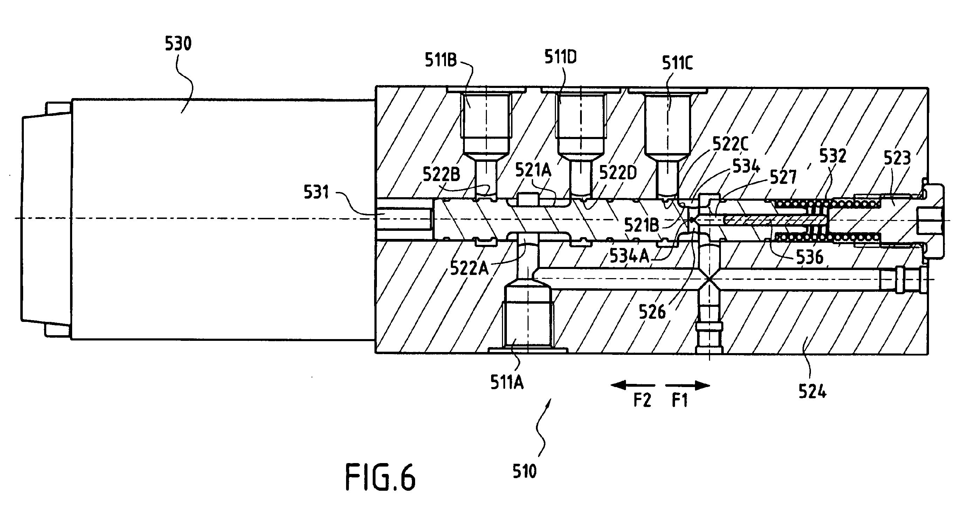

La figure 6 montre cette valve en situation de régulation de l'anti-patinage, dans laquelle elle se comporte comme un réducteur de pression, vis-à-vis de la pression dans ce cylindre de frein.

Sur la figure 6, la gorge 521A est en regard de l'orifice 522A et son extrémité aval dans le sens F1 de l'orifice 522B, tandis que la gorge 521B est en regard de l'orifice 522A' et que son extrémité amont dans le sens F1 est au bord de l'orifice 522C.

La valve est donc dans une position intermédiaire pour l'anti-patinage dans laquelle, lorsque le tiroir 520 est déplacé dans le sens F1, la communication entre les voies 511A et 511D s'ouvre, permettant ainsi l'augmentation de la pression dans le cylindre de frein et dans laquelle, lorsque le tiroir est déplacé dans le sens contraire F2, c'est la communication entre les voies 511A et 511C qui s'ouvre, permettant ainsi le délestage de ce cylindre.

La valve 510 comporte une chambre de commande de rappel 534 qui est reliée à la voie 511A dans la position d'anti-patinage. Ainsi, la pression dans la chambre 534 dépend de la pression à la voie 511A (pression du cylindre de frein). Cette chambre ayant une paroi mobile 534A délimitée par une surface du tiroir tournée vers le sens F1 (c'est la paroi amont, considérée dans le sens F1, d'un perçage transversal 526 du tiroir 520), une augmentation de la pression dans cette chambre provoque un rappel du tiroir 520 en sens contraire de son premier sens de déplacement.

En conséquence, si la pression augmente dans la chambre 534 alors que le tiroir est dans sa position d'anti-patinage, la section de communication entre les voies 511A et 511D diminue, de sorte que la perte de charge entre la voie 511D et la voie 511A augmente pour éviter un freinage excessif de la roue qui patine.

Les orifices 522B, 522A, 522D, 522C et 522A' de l'alésage 522 sont situés les uns après les autres dans le sens F1.

L'alésage transversal 526 du tiroir 520 communique avec la gorge 521B pour permettre l'alimentation de la chambre 534 par le fluide provenant de la voie 511A et la vidange de cette chambre par la voie 511C.

Du côté opposé à cette paroi mobile, la chambre 534 est délimitée par la paroi fixe constituée par l'extrémité 536A d'une aiguille 536 disposée dans un passage longitudinal 527 du tiroir et en appui contre un bouchon 523 qui ferme l'alésage 522. Le ressort 532 est également en appui contre ce bouchon.

Les efforts de rappel dans le sens F2 exercés sur le tiroir par le ressort 532 et par la pression de fluide, agissant sur l'extrémité 536A de l'aiguille 536 constituant une paroi fixe de la chambre 534 située en regard de sa paroi mobile 534A, s'opposent donc aux efforts qu'exerce l'actionneur 530 (par sa tête d'actionnement 531) sur le tiroir pour le déplacer dans le sens F1.

La section de l'aiguille et la puissance de l'actionneur sont choisies pour que ces efforts s'équilibrent à l'issue d'un processus de contrôle du patinage d'une roue dont le cylindre de frein est relié à la voie 511A ou d'un processus de contrôle de blocage de cette roue.

La pression à la voie 511A et donc dans le cylindre de frein est ainsi régulée par le fait que les efforts antagonistes précités ont des intensités de même ordre.

## Revendications

1. Dispositif anti-patinage et anti-blocage des roues d'un véhicule équipé d'un système de freinage comprenant un ou plusieurs cylindres de frein (100, 200, 300, 400) associés, chacun, à au moins une roue, une source de fluide sous pression (10) et une commande de frein (14) apte à être actionnée pour assurer un freinage en alimentant lesdits cylindres en fluide sous pression par au moins une valve de freinage et une conduite de freinage (44, 46), le dispositif comportant, pour le ou chaque cylindre de frein (100, 200, 300, 400), une valve de commande (110, 210, 310, 410 ; 510, 610, 710, 810) susceptible d'adopter une position de freinage normal (110A, 210A, 310A, 410A ; 510A, 610A, 710A, 810A) dans laquelle elle relie le cylindre à la conduite de freinage (44, 46) et au moins une position de mode particulier (110B, 210B, 310B, 410B ; 510B, 510C ; 610B, 610C ; 710B, 710C ; 810B, 810C) dans laquelle elle relie le cylindre à une conduite de branchement (52 ; 152, 153) et des moyens (120, 220, 320, 420, UC) pour détecter une situation de patinage ou une situation de tendance au blocage d'une roue et pour commander en conséquence au moins la valve de commande associée au cylindre de frein associé à cette roue,
**caractérisé en ce qu'**il comporte un sélecteur de fonction (50 ; 150) susceptible d'adopter une position de mode anti-patinage (50A ; 150A) dans laquelle il relie une conduite de branchement (52 ; 152, 153) à une alimentation en fluide (54) et une position de mode anti-blocage (50B ; 150B) dans laquelle il relie une conduite de branchement (52 ; 152, 153) à une vidange (56), de sorte que la conduite de branchement à laquelle la valve de commande (110, 210, 310, 410 ; 510, 610, 710, 810) relie le cylindre de frein associé (100, 200, 300, 400) dans sa position de mode particulier est elle-même reliée à la vidange ou à l'alimentation en fluide selon la position du sélecteur de fonction, et **en ce que** la valve de commande (110, 210, 310, 410, 510, 610, 710, 810) du ou de chaque cylindre de frein est une valve progressive apte à être commandée de telle sorte que, lorsque le sélecteur de fonction (50 ; 150) est dans sa position de mode anti-patinage, la commande de la valve de commande permet de doser un effort de freinage pour maîtriser une situation de patinage et que, lorsque le sélecteur de fonction (50 ; 150) est dans sa position de mode anti-blocage, la commande de la valve de commande permet de doser le relâchement du freinage d'une roue.

2. Dispositif selon la revendication 1, **caractérisé en ce que** le sélecteur de fonction (50) comprend une voie d'alimentation (51A) reliée à l'alimentation en fluide (54), une voie de vidange (51B) et une voie de sortie (51C) reliée à la conduite de branchement (52), **en ce que**, pour chaque cylindre de frein, la valve de commande (110, 210, 310, 410) comprend une voie (111A) de raccordement au cylindre, une voie (111B) de raccordement à la conduite de freinage (44, 46) et une voie (111C) de raccordement à la conduite de branchement (52), et **en ce que**, dans la position de mode anti-blocage (50B) du sélecteur (50), la voie de vidange (51B) et la voie de sortie (51C) sont reliées tandis que la voie d'alimentation (51A) est isolée de ces voies, dans la position de mode anti-patinage (50A) du sélecteur (50), la voie d'alimentation (51A) et la voie de sortie (51C) sont reliées tandis que la voie de vidange (51B) est isolée de ces voies, dans la position de freinage normal (110A, 210A, 310A, 410A) de la valve de commande (110, 210, 310, 410), la voie (111A) de raccordement au cylindre et la voie (111B) de raccordement à la conduite de freinage (44, 46) sont reliées tandis que la voie (111C) de raccordement à la conduite de branchement (52) est isolée de ces voies et, dans la position (110B) de mode particulier de la valve de commande (110, 210, 310, 410), la voie (111A) de raccordement au cylindre (100, 200, 300, 400) et la voie (111C) de raccordement à la conduite de branchement sont reliées tandis que la voie (111B) de raccordement à la conduite de freinage (44, 46) est isolée de ces voies.

3. Dispositif selon la revendication 1, **caractérisé en ce que** le sélecteur de fonction (150) comprend une voie d'alimentation (151A) reliée à l'alimentation en fluide (54), une voie de vidange (151B), une première voie de sortie (151C) reliée à une première conduite de branchement (152) et une deuxième voie de sortie (151D) reliée à une deuxième conduite de branchement (153), **en ce que**, pour chaque cylindre de frein (100, 200, 300, 400), la valve de commande (510, 610, 710, 810) est susceptible d'adopter deux positions de mode particulier (510B, 510C ; 610B, 610C ; 710B, 710C ; 810B, 810C), respectivement une position d'anti-blocage et une position d'anti-patinage, et comprend une voie (511A) de raccordement au cylindre, une voie (511B) de raccordement à la conduite de freinage, une voie (511C) de raccordement à la première conduite de branchement et une voie (511D) de raccordement à la deuxième conduite de branchement, et **en ce que**, dans la position (150B) de mode anti-blocage du sélecteur (150), la voie de vidange (151B) et la première voie de sortie (151C) sont reliées tandis que la voie d'alimentation (151A) est isolée de ces voies, dans la position (150A) de mode anti-patinage du sélecteur (150), la voie d'alimentation (151A) et la deuxième voie de sortie (151D) sont reliées tandis que la voie de vidange (151B) est isolée de ces voies et, dans la position de freinage normal (510A, 610A, 710A, 810A) de la valve de commande (510, 610, 710, 810), la voie (511A) de raccordement au cylindre et la voie (511B) de raccordement à la conduite de freinage (44) sont reliées tandis que les voies (511C, 511D) de raccordement aux première et deuxième conduite de branchement (152, 153) sont isolées de ces voies et sont isolées l'une de l'autre, dans la position (510B) d'anti-blocage de la valve de commande,'la voie (511A) de raccordement au cylindre et la voie (511C) de raccordement à la première conduite de branchement sont reliées tandis que la voie (511B) de raccordement à la conduite de freinage et la voie (511D) de raccordement à la deuxième conduite de branchement sont isolées de ces voies et, dans la position (510C) d'anti-patinage de ladite valve, la voie (511A) de raccordement au cylindre et la voie (511D) de raccordement à la deuxième conduite de branchement sont reliées tandis que la voie (511B) de raccordement à la conduite de freinage et la voie (511C) de raccordement à la première conduite de branchement (152) sont isolées de ces voies et sont isolées l'une de l'autre.

4. Dispositif selon la revendication 3, **caractérisé en ce que** dans la position (150B) de mode anti-blocage du sélecteur de fonction (150), la deuxième voie de sortie (151D) est également reliée à la voie de vidange (151B) et, dans la position (150A) de mode anti-patinage du sélecteur (150), la première voie de sortie (151C) est reliée à la voie de vidange (151B).

5. Dispositif selon l'une quelconque des revendications 1 à 4, **caractérisé en ce que**, pour chaque cylindre de frein, la valve de commande (510, 610, 710, 810) comporte des moyens formant réducteur de pression à double action pour régler la pression de fluide dans le cylindre en fonction de la commande de ladite valve.

6. Dispositif selon l'une quelconque des revendications 3 à 5, **caractérisé en ce que**, pour chaque cylindre de frein (100, 200, 300, 400), la valve de commande (510, 610, 710, 810) passe par sa position d'anti-blocage (510B, 610B, 710B, 810B) entre sa position de freinage normal (510A, 610A, 710A, 810A) et sa position d'anti-patinage.

7. Dispositif selon l'une quelconque des revendications 1 à 6, **caractérisé en ce que** la position de mode anti-blocage (50B; 150B) du sélecteur de fonction (50 ; 150) est une position de repos dudit sélecteur vers laquelle ce dernier est rappelé en permanence, tandis qu'il doit être commandé pour passer de cette position à sa position de mode anti-patinage (50A ; 150A).

8. Dispositif selon l'une quelconque des revendications 1 à 7, **caractérisé en ce que**, pour chaque cylindre de frein (100, 200, 300, 400), la position (111A) de freinage normal de la valve de commande (110, 210, 310, 410 ; 510, 610, 710, 810) est une position de repos de cette valve, vers laquelle cette dernière est rappelée en permanence, tandis qu'elle doit être commandée pour passer de cette position à sa ou ses positions de mode particulier.

9. Dispositif selon l'une quelconque des revendications 1 à 8, **caractérisé en ce qu'**il comporte au moins un accumulateur de fluide de freinage (20, 22) apte à être alimenté par la source de fluide sous pression (10) et **en ce qu'**il comporte au moins une valve de freinage (16, 18) susceptible d'être actionnée pour relier la conduite de freinage (44, 46) audit accumulateur.

10. Dispositif selon l'une quelconque des revendications 1 à 9, **caractérisé en ce qu'**il comporte un accumulateur de fluide d'anti-patinage (58) apte à être alimenté par la source de fluide sous pression (10) et à être raccordé à ladite alimentation en fluide (54) du sélecteur de fonction **(50 ; 150).**

11. Dispositif selon l'une quelconque des revendications 1 à 10, **caractérisé en ce que** la pression de fluide à l'alimentation en fluide (54) du sélecteur de fonction (50 ; 150) est inférieure à la pression d'alimentation en fluide de la conduite de freinage (44, 46).

12. Dispositif selon les revendications 10 et 11, **caractérisé en ce que** l'accumulateur de fluide d'anti-patinage (58) est raccordé à l'alimentation en fluide (54) par l'intermédiaire d'un réducteur de pression (60).

13. Dispositif selon l'une quelconque des revendications 1 à 12, **caractérisé en ce qu'**il comprend des moyens (120, 220, 320, 420) pour détecter la vitesse de chacune desdites roues, des moyens (UC) pour déterminer une vitesse cible pour chacune de ces roues et des moyens pour comparer la vitesse de détectée à ladite vitesse cible et pour en déduire l'existence d'une situation de patinage ou de tendance au blocage d'une roue.

14. Dispositif selon la revendication 13, **caractérisé en ce qu'**il comprend une unité de commande (UC) apte, lorsqu'une situation de patinage ou de tendance au blocage d'une roue est constatée, à commander le passage des valves de commande (110, 210, 310, 410 ; 510, 610, 710, 810) entre leurs positions de freinage normal (110A, 210A, 310A, 410A ; 510A, 610A, 710A, 810A) et de mode particulier (110B, 210B, 310B, 410B; 510B, 510C; 610B, 610C; 710B, 710C; 810B, 810C) en fonction des vitesses des roues et de leurs vitesses cibles.

15. Dispositif selon l'une quelconque des revendications 1 à 14, **caractérisé en ce que** le passage du sélecteur de fonction (50 ; 150) entre sa position de mode anti-blocage (50B ; 150B) et sa position de mode anti-patinage (50A, 150A) peut être commandé manuellement.

16. Dispositif selon la revendication 14, **caractérisé en ce que** l'unité de commande (UC) est apte à commander le passage du sélecteur de fonction (50 ; 150) entre sa position de mode anti-blocage (50B, 150B) et sa position de mode anti-patinage (50A, 150A) en fonction des vitesses des roues et de leurs vitesses cibles.

17. Dispositif selon les revendications 15 et 16, **caractérisé en ce que** l'unité de commande (UC) est apte à commander le passage du sélecteur de fonction (50, 150) entre sa position de mode anti-blocage (50B, 150B) et sa position de mode anti-patinage (50A, 150A) en fonction des vitesses des roues et de leurs vitesses cibles tant que lesdites vitesses cibles restent inférieures à une valeur seuil déterminée, tandis que le passage du sélecteur de fonction de sa position de mode anti-blocage à sa position de mode anti-patinage ne peut être commandé que manuellement lorsque les vitesses cibles dépassent ladite valeur seuil.

## Claims

1. An antislip regulation and an antilock braking system for the wheels of a vehicle equipped with a braking system comprising one or more brake cylinders (100, 200, 300, 400) each associated with at least one wheel, a source of fluid under pressure (10), and a brake control (14) adapted to be operated to effect braking by feeding said cylinders with fluid under pressure via at least one brake valve and one brake pipe (44, 46), the system including a control valve (110, 210, 310, 410; 510, 610, 710, 810) for the brake cylinder or each brake cylinder (100, 200, 300, 400) adapted to adopt a normal braking position (100A, 210A, 310A, 410A; 510A, 610A, 710A, 810A) in which it connects the cylinder to the brake pipe (44, 46) and at least one special mode position (110B, 210B, 310B, 410B; 510B, 510C; 610B, 610C; 710B, 710C; 810B, 810C) in which it connects the cylinder to a branch pipe (52; 152, 153), and means (120, 220, 320, 420, UC) for detecting wheelspin or a wheel tending to lock and for commanding in consequence thereof at least the control valve associated with the brake cylinder associated with that wheel,
the system being **characterised in that** it comprises a function selector (50; 150) adapted to adopt an antislip mode position (50A; 150A) in which it connects a branch pipe (52; 152, 153) to a fluid feed pipe (54) and an antilock mode position (50B; 150B) in which it connects a branch pipe (52; 152, 153) to a return line (56), such that the branch pipe connected to the associated brake cylinder (100, 200, 300, 400) via the control valve (110, 210, 310, 410; 510, 610, 710, 810) in its special mode position is itself connected either to the return line or to the fluid feed pipe, according to the position of the function selector and **in that** the control valve (110, 210, 310, 410, 510, 610, 710, 810) of the brake cylinder or of each brake cylinder is a progressive valve adapted to be controlled such that, when the function selector (50; 150) is in its antislip mode position, operation of the control valve modulates a braking force to control wheelspin and, when the function selector (50; 150) is in its antilock mode position, operation of the control valve modulates the releasing of the braking of a wheel.

2. A system according to claim 1, **characterised in that** the function selector (50) comprises a feed channel (51A) connected to the fluid feed pipe (54), a return channel (51B), and an outlet channel (51C) connected to the branch pipe (52), **in that** the control valve (110, 210, 310, 410) for each brake cylinder comprises a channel (111A) connected to the cylinder, a channel (111B) connected to the brake pipe (44, 46), and a channel (111C) connected to the branch pipe (52), and **in that**, in the antilock mode position (50B) of the selector (50), the return channel (51B) and the outlet channel (51C) are connected together and the feed channel (51A) is isolated from them, in the antislip mode position (50A) of the selector (50), the feed channel (51A) and the outlet channel (51C) are connected together and the return channel (51B) is isolated from them, in the normal braking position (110A, 210A, 310A, 410A) of the control valve (110, 210, 310, 410), the channel (111A) connected to the cylinder and the channel (111B) connected to the brake pipe (44, 46) are connected together and the channel (111C) connected to the branch pipe (52) is isolated from them, and, in the special mode position (110B) of the control valve (1110, 210, 310, 410), the channel (111A) connected to the cylinder (100, 200, 300, 400) and the channel (111C) connected to the branch pipe are connected together and the channel (111B) connected to the brake pipe (44, 46) is isolated from them.

3. A system according to claim 1, **characterised in that** the function selector (150) comprises a feed channel (151A) connected to the fluid feed pipe (54), a return channel (151B), a first outlet channel (151C) connected to a first branch pipe (152), and a second outlet channel (151D) connected to a second branch pipe (153), **in that** the control valve (510, 610, 710, 810) for each brake cylinder (100, 200, 300, 400) is adapted to adopt two special mode positions (510B, 510C; 610B, 610C; 710B, 710C; 810B, 810C), respectively an antilock mode position and an antislip mode position, and comprises a channel (511A) connected to the cylinder, a channel (511B) connected to the brake pipe, a channel (511C) connected to the first branch pipe, and a channel (511D) connected to the second branch pipe, and **in that**, in the antilock mode position (150B) of the selector (150), the return channel (151B) and the first outlet channel (151C) are connected together and the feed channel (151A) is isolated from them, in the antislip mode position (150A) of the selector (150), the feed channel (151A) and the second outlet channel (151D) are connected together and the return channel (151B) is isolated from them, and, in the normal braking position (510A, 610A, 710A, 810A) of the control valve (510, 610, 710, 810), the channel (511A) connected to the cylinder and the channel (511B) connected to the brake pipe (44) are connected together and the channels (511C, 511D) connected to the first and second branch pipes (152, 153) are isolated from them and from each other, in the antilock position (510B) of the control valve, the channel (511A) connected to the cylinder and the channel (511C) connected to the first branch pipe are connected together and the channel (511B) connected to the brake pipe and the channel (511D) connected to the second branch pipe are isolated from them, and, in the antislip position (510C) of said valve, the channel (511A) connected to the cylinder and the channel (511D) connected to the second branch pipe are connected together and the channel (511B) connected to the brake pipe and the channel (511C) connected to the first branch pipe (152) are isolated from them and from each other.

4. A system according to claim 3, **characterised in that**, in the antilock mode position (150B) of the function selector (150), the second outlet channel (151D) is likewise connected to the return channel (151B) and, in the antislip mode position (150A) of the selector (150), the first outlet channel (151C) is connected to the return channel (151B).

5. A system according to any one of claims 1 to 4, **characterised in that** the control valve (510, 610, 710, 810) for each brake cylinder includes double-acting pressure reducer means for adjusting the fluid pressure in the cylinder as a function of the operation of said valve.

6. A system according to any one of claims 3 to 5, **characterised in that** the control valve (510, 610, 710, 810) for each brake cylinder (100, 200, 300, 400) passes through its antilock position (510B, 610B, 710B, 810B) on moving between its normal braking position (510A, 610A, 710A, 810A) and its antislip position.

7. A system according to any one of claims 1 to 6, **characterised in that** the antilock mode position (50B; 150B) of the function selector (50; 150) is an unoperated position of said selector towards which it is urged at all times, whereas it must be operated to move it from that position to its antislip mode position (50A; 150A).

8. A system according to any one of claims 1 to 7, **characterised in that** the normal braking position (111A) of the control valve (110, 210, 310, 410; 510, 610, 710, 810) for each brake cylinder (100, 200, 300, 400) is an unoperated position of that valve towards which it is urged at all times, whereas it must be operated to move it from that position to its special mode position(s).

9. A system according to any one of claims 1 to 8, **characterised in that** it includes at least one brake fluid accumulator (20, 22) adapted to be supplied by the source (10) of fluid under pressure and **in that** it includes at least one brake valve (16, 18) adapted to be operated to connect the brake pipe (44, 46) to said accumulator.

10. A system according to any one of claims 1 to 9, **characterised in that** it includes an antislip fluid accumulator (58) adapted to be supplied by the source (10) of fluid under pressure and to be connected to said fluid feed pipe (54) of the function selector (50; 150).

11. A system according to any one of claims 1 to 10, **characterised in that** the fluid pressure in the fluid feed pipe (54) of the function selector (50; 150) is lower than the pressure at which fluid is fed to the brake pipe (44, 46).

12. A system according to claim 10 or claim 11, **characterised in that** the antislip fluid accumulator (58) is connected to the fluid feed pipe (54) via a pressure reducer (60).

13. A system according to any one of claims 1 to 12, **characterised in that** it comprises means (120, 220, 320, 420) for sensing the speed of each of said wheels, means (UC) for determining a target speed for each wheel, and means for comparing the sensed speed to said target speed and deducing therefrom the existence of wheelspin or of a wheel tending to lock.

14. A system according to claim 13, **characterised in that** it comprises a control unit (UC) adapted, if wheelspin or a wheel tending to lock is deduced, to move the control valves (110, 210, 310, 410; 510, 610, 710, 810) between their normal braking position (110A, 210A, 310A, 410; 510A, 610A, 710A, 810A) and their special mode position (110B, 210B, 310B, 410B; 510B, 510C; 610B, 610C; 710B, 710C; 810B, 810C) as a function of the speeds of the wheels and their target speeds.

15. A system according to any one of claims 1 to 14, **characterised in that** the function selector (50; 150) is adapted to be moved between its antilock mode position (50B; 150B) and its antislip mode position (50A, 150A) manually.

16. A system according to claim 14, **characterised in that** the control unit (UC) is adapted to move the function selector (50; 150) between its antilock mode position (50B; 150B) and its antislip mode position (50A, 150A) as a function of the speeds of the wheels and a target speed.

17. A system according to claim 15 or claim 16, **characterised in that** the control unit (UC) is adapted to move the function selector (50; 150) between its antilock mode position (50B; 150B) and its antislip mode position (50A, 150A) as a function of the speeds of the wheels and their target speeds for as long as said target speeds remain below a particular threshold value, whereas the function selector is adapted to be moved only manually from its antilock mode position to its antislip mode position if the target speeds exceed said threshold value.

## Patentansprüche

1. Anti-Schlupf- und Anti-Blockier-Vorrichtung der Räder eines Fahrzeugs, das mit einem Bremssystem ausgestattet ist, welches einen oder mehrere Bremszylinder (100, 200, 300, 400), die jeweils wenigstens einem Rad zugeordnet sind, eine Druckfluidquelle (10) sowie eine Bremssteuerung (14) umfaßt, die geeignet ist, betätigt zu werden, um eine Bremsung dadurch zu gewährleisten, daß die genannten Zylinder über wenigstens ein Bremsventil und eine Bremsleitung (44, 46) mit Druckfluid beaufschlagt werden, wobei die Vorrichtung für den oder jeden Bremszylinder (100, 200, 300, 400) ein Steuerventil (110, 210, 310, 410; 510, 610, 710, 810), das geeignet ist, eine normale Bremsposition (110A, 210A, 310A, 410A; 510A, 610A, 710A, 810A), in der es den Zylinder mit der Bremsleitung (44, 46) verbindet, und wenigstens eine Position besonderer Betriebsart (110B, 210B, 310B, 410B; 510B, 510C; 610B, 610C; 710B, 710C; 810B, 810C), einzunehmen, in welcher es den Zylinder mit einer Zweigleitung (52; 152, 153) verbindet, sowie Mittel (120, 220, 320, 420, UC) umfaßt, um eine Schlupfsituation oder eine Blockierneigungssituation eines Rades zu erfassen und um demzufolge wenigstens das Steuerventil zu steuern, das dem diesem Rad zugeordneten Bremszylinder zugeordnet ist,
**dadurch gekennzeichnet, daß** sie eine Funktionsauswahlvorrichtung (50; 150) umfaßt, die geeignet ist, eine Anti-Schlupf-Betriebsposition (50A; 150A), in der sie eine Zweigleitung (52; 152, 153) mit einer Fluidversorgung (54) verbindet, und eine Anti-Blockier-Betriebsposition (50B; 150B) einzunehmen, in der sie eine Zweigleitung (52; 152, 153) mit einem Auslaß (56) verbindet, so daß die Zweigleitung, mit der das Steuerventil (110, 210, 310, 410; 510, 610, 710, 810) in seiner Position besonderer Betriebsart den zugeordneten Bremszylinder (100, 200, 300, 400) verbindet, ihrerseits - je nach Position der Funktionsauswahlvorrichtung - mit dem Auslaß oder der Fluidversorgung verbunden ist, und daß das Steuerventil (110, 210, 310, 410, 510, 610, 710, 810) des oder jedes Bremszylinders ein progressives Ventil ist, welches geeignet ist, derart gesteuert zu werden, daß dann, wenn sich die Funktionsauswahlvorrichtung (50; 150) in ihrer Anti-Schlupf-Betriebsposition befindet, die Steuerung des Steuerventils ermöglicht, eine Bremskraft zu dosieren, um eine Schlupfsituation zu meistern, und dann, wenn sich die Funktionsauswahlvorrichtung (50; 150) in ihrer Anti-Blockier-Betriebsposition befindet, die Steuerung des Steuerventils ermöglicht, das Nachlassen der Bremsung eines Rades zu dosieren.

2. Vorrichtung nach Anspruch 1, **dadurch gekennzeichnet, daß** die Funktionsauswahlvorrichtung (50) einen mit der Fluidversorgung (54) verbundenen Versorgungskanal (51A), einen Entleerungskanal (51B) sowie einen mit der Zweigleitung (52) verbundenen Auslaßkanal (51C) umfaßt, daß für jeden Bremszylinder das Steuerventil (110, 210, 310, 410) einen Kanal (111A) zum Verbinden mit dem Zylinder, einen Kanal (111B) zum Verbinden mit der Bremsleitung (44, 46) sowie einen Kanal (111C) zum Verbinden mit der Zweigleitung (52) umfaßt, und daß in der Anti-Blockier-Betriebsposition (50B) der Auswahlvorrichtung (50) der Entleerungskanal (51B) und der Auslaßkanal (51C) verbunden sind, während der Versorgungskanal (51A) von diesen Kanälen isoliert ist, in der Anti-Schlupf-Betriebsposition (50A) der Auswahlvorrichtung (50) der Versorgungskanal (51A) und der Auslaßkanal (51C) verbunden sind, während der Entleerungskanal (51 B) von diesen Kanälen isoliert ist, in der normalen Bremsposition (110A, 210A, 310A, 410A) des Steuerventils (110, 210, 310, 410) der Kanal (111A) zum Verbinden mit dem Zylinder und der Kanal (111B) zum Verbinden mit der Bremsleitung (44, 46) verbunden sind, während der Kanal (111C) zum Verbinden mit der Zweigleitung (52) von diesen Kanälen isoliert ist, und in der Position (110B) besonderer Betriebsart des Steuerventils (110, 210, 310, 410) der Kanal (111A) zum Verbinden mit dem Zylinder (100, 200, 300, 400) und der Kanal (111C) zum Verbinden mit der Zweigleitung verbunden sind, während der Kanal (111B) zum Verbinden mit der Bremsleitung (44, 46) von diesen Kanälen isoliert ist.

3. Vorrichtung nach Anspruch 1, **dadurch gekennzeichnet, daß** die Funktionsauswahlvorrichtung (150) einen mit der Fluidversorgung (54) verbundenen Versorgungskanal (151A), einen Entleerungskanal (151B), einen mit einer ersten Zweigleitung (152) verbundenen ersten Auslaßkanal (151C) sowie einen mit einer zweiten Zweigleitung (153) verbundenen zweiten Auslaßkanal (151D) umfaßt, daß für jeden Bremszylinder (100, 200, 300, 400) das Steuerventil (510, 610, 710, 810) geeignet ist, zwei Positionen besonderer Betriebsart (510B, 510C; 610B, 610C; 710B, 710C; 810B, 810C), jeweils eine Anti-Blockier-Position und eine Anti-Schlupf-Position einzunehmen, und einen Kanal (511A) zum Verbinden mit dem Zylinder, einen Kanal (511B) zum Verbinden mit der Bremsleitung, einen Kanal (511C) zum Verbinden mit der ersten Zweigleitung und einen Kanal (511D) zum Verbinden mit der zweiten Zweigleitung umfaßt, und daß in der Anti-Blockier-Betriebsposition (150B) der Auswahlvorrichtung (150) der Entleerungskanal (151B) und der erste Auslaßkanal (151C) verbunden sind, während der Versorgungskanal (151A) von diesen Kanälen isoliert ist, in der Anti-Schlupf-Betriebsposition (150A) der Auswahlvorrichtung (150) der Versorgungskanal (151A) und der zweite Auslaßkanal (151D) verbunden sind, während der Entleerungskanal (151 B) von diesen Kanälen isoliert ist, und in der normalen Bremsposition (510A, 610A, 710A, 810A) des Steuerventils (510, 610, 710, 810) der Kanal (511A) zum Verbinden mit dem Zylinder und der Kanal (511B) zum Verbinden mit der Bremsleitung (44) verbunden sind, während die Kanäle (511C, 511D) zum verbinden mit der ersten und zweiten Zweigleitung (152, 153) von diesen Kanälen sowie voneinander isoliert sind, in der Anti-Blockier-Position (510B) des Steuerventils der Kanal (511A) zum Verbinden mit dem Zylinder und der Kanal (511C) zum Verbinden mit der ersten Zweigleitung verbunden sind, während der Kanal (511A) zum Verbinden mit der Bremsleitung und der Kanal (511D) zum Verbinden mit der zweiten Zweigleitung von diesen Kanälen isoliert sind, und in der Anti-Schlupf-Position (510C) des Ventils der Kanal (511A) zum Verbinden mit dem Zylinder und der Kanal (511D) zum Verbinden mit der zweiten Zweigleitung verbunden sind, während der Kanal (511B) zum Verbinden mit der Bremsleitung und der Kanal (511C) zum Verbinden mit der ersten Zweigleitung (152) von diesen Kanälen sowie voneinander isoliert sind.

4. Vorrichtung nach Anspruch 3, **dadurch gekennzeichnet, daß** in der Anti-Blockier-Betriebsposition (150B) der Funktionsauswahlvorrichtung (150) der zweite Auslaßkanal (151D) auch mit dem Entleerungskanal (151B) verbunden ist, und in der Anti-Schlupf-Betriebsposition (150A) der Auswahlvorrichtung (150) der erste Auslaßkanal (151C) mit dem Entleerungskanal (151B) verbunden ist.

5. Vorrichtung nach irgendeinem der Ansprüche 1 bis 4, **dadurch gekennzeichnet, daß** für jeden Bremszylinder das Steuerventil (510, 610, 710, 810) Mittel umfaßt, die einen Druckminderer mit Zweifachwirkung bilden, um den Fluiddruck in dem Zylinder in Abhängigkeit von der Steuerung des Ventils zu regeln.

6. Vorrichtung nach irgendeinem der Ansprüche 3 bis 5, **dadurch gekennzeichnet, daß** sich das Steuerventil (510, 610, 710, 810), für jeden Bremszylinder (100, 200, 300, 400), über seine Anti-Blockierstellung (510B, 610B, 710B, 810B) zwischen seiner normalen Bremsposition (510A, 610A, 710A, 810A) und seiner Anti-Schlupf-Position bewegt.

7. Vorrichtung nach irgendeinem der Ansprüche 1 bis 6, **dadurch gekennzeichnet, daß** die Anti-Blockier-Betriebsposition (50B; 150B) der Funktionsauswahlvorrichtung (50; 150) eine Ruhestellung der Auswahlvorrichtung ist, in die letztere ständig rückgestellt wird, während sie gesteuert werden muß, um von dieser Position in ihre Anti-Schlupf-Betriebsposition (50A; 150A) überzugehen.

8. Vorrichtung nach irgendeinem der Ansprüche 1 bis 7, **dadurch gekennzeichnet, daß** für jeden Bremszylinder (100, 200, 300, 400) die normale Bremsposition (111A) des Steuerventils (110, 210, 310, 410; 510, 610, 710, 810) eine Ruhestellung dieses Ventils ist, in die letzteres ständig rückgestellt wird, während es gesteuert werden muß, um von dieser Position in seine Position oder Positionen besonderer Betriebsart überzugehen.

9. Vorrichtung nach irgendeinem der Ansprüche 1 bis 8, **dadurch gekennzeichnet, daß** sie wenigstens einen Bremsflüssigkeitsspeicher (20, 22) umfaßt, der geeignet ist, über die Druckfluidquelle (10) versorgt zu werden, und daß sie wenigstens ein Bremsventil (16, 18) umfaßt, das geeignet ist, betätigt zu werden, um die Bremsleitung (44, 46) mit dem Speicher zu verbinden.

10. Vorrichtung nach irgendeinem der Ansprüche 1 bis 9, **dadurch gekennzeichnet, daß** sie einen Anti-Schlupf-Flüssigkeitsspeicher (58) umfaßt, der geeignet ist, über die Druckfluidquelle (10) versorgt und mit der Fluidversorgung (54) der Funktionswahlvorrichtung (50; 150) verbunden zu werden.

11. Vorrichtung nach irgendeinem der Ansprüche 1 bis 10, **dadurch gekennzeichnet, daß** der Fluiddruck an der Fluidversorgung (54) der Funktionsauswahlvorrichtung (50; 150) geringer ist als der Fluidversorgungsdruck der Bremsleitung (44, 46).

12. Vorrichtung nach den Ansprüchen 10 und 11, **dadurch gekennzeichnet, daß** der Anti-Schlupf-Flüssigkeitsspeicher (58) über einen Druckminderer (60) mit der Fluidversorgung (54) verbunden ist.

13. Vorrichtung nach irgendeinem der Ansprüche 1 bis 12, **dadurch gekennzeichnet, daß** sie Mittel (120, 220, 320, 420) zum Erfassen der Geschwindigkeit eines jeden Rades, Mittel (UC) zum Bestimmen einer Zielgeschwindigkeit für jedes dieser Räder sowie Mittel, um die erfaßte Geschwindigkeit mit der Zielgeschwindigkeit zu vergleichen und um hieraus das Vorliegen einer Schlupf- oder einer Blockierneigungssituation eines Rades abzuleiten, umfaßt.

14. Vorrichtung nach Anspruch 13, **dadurch gekennzeichnet, daß** sie eine Steuereinheit (UC) umfaßt, welche geeignet ist, dann, wenn eine Schlupf- oder Blockierneigungssituation eines Rades festgestellt wird, den Übergang der Steuerventile (110, 210, 310, 410; 510, 610, 710, 810) zwischen ihrer Position des normalen Bremsens (110A, 210A, 310A, 410A; 510A, 610A, 710A, 810A) und ihrer Position besonderer Betriebsart (110B, 210B, 310B, 410B; 510B, 510C; 610B, 610C; 710B, 710C; 810B, 810C) in Abhängigkeit der Geschwindigkeiten der Räder und deren Zielgeschwindigkeiten zu steuern.

15. Vorrichtung nach irgendeinem der Ansprüche 1 bis 14, **dadurch gekennzeichnet, daß** der Übergang der Funktionsauswahlvorrichtung (50; 150) zwischen ihrer Anti-Blockier-Betriebsposition (50B; 150B) und ihrer Anti-Schlupf-Betriebsposition (50A, 150A) manuell gesteuert werden kann.

16. Vorrichtung nach Anspruch 14, **dadurch gekennzeichnet, daß** die Steuereinheit (UC) geeignet ist, den Übergang der Funktionsauswahlvorrichtung (50; 150) zwischen ihrer Anti-Blockier-Betriebsposition (50B, 150B) und ihrer Anti-Schlupf-Betriebsposition (50A, 150A) in Abhängigkeit der Geschwindigkeiten der Räder und deren Zielgeschwindigkeiten zu steuern.

17. Vorrichtung nach den Ansprüchen 15 und 16, **dadurch gekennzeichnet, daß** die Steuereinheit (UC) geeignet ist, den Übergang der Funktionsauswahlvorrichtung (50, 150) zwischen ihrer Anti-Blockier-Betriebsposition (50B, 150B) und ihrer Anti-Schlupf-Betriebsposition (50A, 150A) in Abhängigkeit der Geschwindigkeiten der Räder und deren Zielgeschwindigkeiten zu steuern, solange die genannten Zielgeschwindigkeiten einen bestimmten Schwellenwert unterschreiten, während der Übergang der Funktionsauswahlvorrichtung von ihrer Anti-Blockier-Betriebsposition in ihre Anti-Schlupf-Betriebsposition lediglich manuell gesteuert werden kann, wenn die Zielgeschwindigkeiten den genannten Schwellenwert überschreiten.
